(19) **Europäisches Patentamt**
**European Patent Office**
**Office européen des brevets**

(11) Veröffentlichungsnummer: **0 017 948**
**B1**

(12) **EUROPÄISCHE PATENTSCHRIFT**

(45) Veröffentlichungstag der Patentschrift: **13.07.83**

(21) Anmeldenummer: **80101989.4**

(22) Anmeldetag: **14.04.80**

(51) Int. Cl.³: **C 08 G 18/32,**
**C 08 G 18/14**

(54) Verfahren zur Herstellung von Polyurethanschaumstoffen.

(30) Priorität: **17.04.79 DE 2915458**

(43) Veröffentlichungstag der Anmeldung:
**29.10.80 Patentblatt 80/22**

(45) Bekanntmachung des Hinweises auf die Patenterteilung:
**13.07.83 Patentblatt 83/28**

(84) Benannte Vertragsstaaten:
**AT BE CH DE FR GB IT LI NL SE**

(56) Entgegenhaltungen:
**DE - A - 1 802 500**
**DE - A - 1 802 500**
**DE - A - 1 953 637**
**DE - A - 1 953 637**
**DE - A - 2 614 203**
**DE - A - 2 614 203**

(73) Patentinhaber: **BASF Aktiengesellschaft**
**Carl-Bosch-Strasse 38**
**D-6700 Ludwigshafen (DE)**

(72) Erfinder: **Fick, Hans-Otto**
**Siemensstrasse 4**
**D-5907 Burbach (DE)**

Courier Press, Leamington Spa, England.

# Verfahren zur Herstellung von Polyurethanschaumstoffen

Die Erfindung betrifft ein Verfahren zur Herstellung von halbharten und harten Polyurethan-Schaumstoffen, wobei als Polyhydroxyverbindungen neutrale, saure oder basische Salze aus hydroxylgruppenhaltigen sekundären und/oder tertiären Aminen und Naphthensäuren oder Mischungen aus den genannten Salzen und üblichen Polyolen verwendet werden.

Die Herstellung von halbharten und harten Polyurethan-Schaumstoffen aus Polyolen, insbesonders polyfunktionellen Polyätherolen, organischen Polyisocyanaten, Katalysatoren, Treibmitteln sowie Hilfs- und Zusatzstoffen wird in der einschlägigen Fachliteratur eingehend beschrieben. Verweisen möchten wir beispielsweise auf das Kunstoff-Handbuch, Band VII, "Polyurethane" von R. Vieweg und A. Höchtlen, Carl Hanser Verlag, München, 1966.

Nach Angaben der CH—PS 343 635 werden zur Herstellung von Polyurethaneschaumstoffen Salze von sekundären oder tertiären Aminen, die gegebenenfalls Hydroxylgruppen gebunden haben können, und Monocarbonsäuren, Polycarbonsäuren, Sulfonsäuren oder sauren Schwefelsäureestern in Mengen von 1 bis 10 Gew.%, bezogen auf die Polyhydroxyverbindung der Polyurethanreaktion, als Aktivatoren verwendet. Bei Verwendung von hydroxylgruppenhaltigen Salzen wird entsprechend den Beispielen die OH-Gruppe vor der Urethanreaktion durch Additions- oder Kondensationsreaktionen maskiert.

Zur Herstellung von Polyurethan-Schaumstoffen können ferner Fettsäuren, Fettsäureester, Fettsäureamide oder Salze von Fettsäuren verwendet werden. So beschreibt die DT—AS 11 73 643 die Herstellung von Weich-Schaumstoffen mit der für eine textile Verarbeitung erwünschten Griffigkeit und samtartigen Oberflächenstruktur aus Toluylen-diisocyanat, einem speziellen Polyesterol und einer besonderen Treibmittelmischung in Gegenwart von 1 bis 10 Gew.%, bezogen auf das Polyesterol, Tallöl. Nach Angaben der britischen Patentschrift 882 949 werden vorzugsweise neutrale, Wasser enthaltende Salze von Hydroxyfettsäuren, wie Hydroxystearinsäure, Ricinolsäure und Ricinusöl, und sekundären und tertiären Aminen zur Herstellung von Schaumstoffen verwendet. Gemäß britischer Patentschrift 1 248 919 kann man dafür auch Amide von Fettsäuren mit 8 bis 24 Kohlenstoffatomen und Dialkanolaminen, die auch noch Salze aus Dialkanolamin und Fettsäure sowie Fettsäureester enthalten können, einsetzen. Die Salze selbst bilden äußerst spröde Schaumstoffe, die vielfach kollabieren. Polyurethankunststoffe mit Skelettstruktur, die anstelle von Zellwänden lediglich Zellstege besitzen, werden gemäß US—PS 3 178 300 ferner aus Polyisocyanaten und Ricinusöl in Gegenwart von Monoalkoholen mit 1 bis 18 Kohlenstoffatomen oder von Monocarbonsäuren mit 2 bis 18 Kohlenstoffatomen hergestellt.

Nachteilig an den beschriebenen Schaumstoffen, insbesonders solchen auf der Grundlage von Tallöl, ist, daß sie gewöhnlich sehr unangenehm riechen und eine nicht ausreichend bleibende Verformung haben. Dem Fachmann ist außerdem bekannt, daß Polyurethaneschaumstoffe mit hohen Anteilen an Naturstoffen etwas ungünstigere mechanische Eigenschaften besitzen als Produkte, die nur synthetische Polyole enthalten.

Aufgabe der vorliegenden Erfindung war es, die aus Erdöl isolierten Naphthensäuren, die zum größten Teil verbrannt werden, einer kommerziellen Nutzung zuzuführen. Ferner sollte versucht werden, die außerordentlich preisgünstige Naphthensäure als Polyolkomponente zur Herstellung von Polyurethan-Schaumstoffen einzusetzen, wobei die üblichen Polyole ganz oder teilweise durch Naphthensäure, deren Derivate oder Salze ersetzt werden sollten.

Diese Aufgabe wurde gelöst durch ein Verfahren zur Herstellung von halbharten und harten Polyurethan-Schaumstoffen aus Polyhydroxyverbindungen, organischen Polyisocyanaten, Triebmitteln und gegebenenfalls Katalysatoren, Hilfs- und Zusatzstoffen, das dadurch gekennzeichnet ist, daß man als Polyhydroxyverbindungen neutrale, saure oder basische Salze aus hydroxylgruppenhaltigen sekundären und/oder tertiären Aminen und Naphthensären verwendet.

Obwohl Naphthensäuren einen charackteristischen Geruch besitzen, sind die erfindungsgemäß herstellbaren Polyurethan-Schaumstoff überraschenderweise nahezu geruchlos. Aufgrund der Zusammensetzung der Naphthensäuren aus aliphatischen, mono- und bicyclischen gesättigten monofunktionellen Carbonsäuren, die außerdem je nach Herkunftsland in gewissen Bereichen schwankt, war erstaunlich, daß die Umsetzung der oben beschriebenen Salze mit organischen Polyisocyanaten zu vernetzten Schaumstoffen mit guten Eigenschaften führt. Überraschend war insbesonderes, daß die erfindungsgemäß hergestellten harten Polyurethan-Schaumstoffe sehr schnell haŕten und sich deshalb für die Herstellung von Sandwichplatten mit hoher Geschwindigkeit eignen. Die Salze besitzen ferner eine gewisse schaumstabilisierende und die Porenstruktur beeinflussende Wirkung, so daß auf Hilfs- und Zusatzstoffe, welche die genannten Effekte ergeben, gegebenenfalls ganz oder teilweise verzichtet werden kann.

Wie bereits dargelegt wurde, werden zur Herstellung der halbharten und harten Polyurethaneschaumstoffe nach dem erfindungsgemäßen Verfahren als Polyhydroxyverbindungen neutrale, saure oder basische Salze aus hydroxylgruppenhaltigen sekundären und/oder tertiären Aminen und Naphthensäuren verwendet. Die Definition "neutrale, saure oder basische Salze" soll hierbei in dem Sinne verstanden werden, daß bei einem neutralen Salz die Komponenten im äquivalenten Mengenverhältnis vorliegen, bei einem sauren Salz die Säure, bei einem basischen Salz die Base im Überschuß vorhanden ist. Hinweise auf die Acidität oder Basizität der Salze sollen durch die Definition nicht gegeben werden. Erfindungsgemäß werden vorzugsweise neutrale und/oder basische Salze, insbesondere basische Salze, verwendet.

Die erfindungsgemäß verwendbaren hydroxylgruppenhaltigen sekundären und tertiären Amine müssen mindestens difunktionell sein. In Betracht kommen besipielsweise Amine, die mindestens eine sekundäre Aminogruppe und mindestens eine Hydroxylgruppe gebunden enthalten oder Amine, die mindestens eine tertiäre Aminogruppe, mindestens eine Hydroxylgruppe und, falls nur eine Hydroxylgruppe vorhanden ist, zusätzlich mindestens einen weiteren Rest mit einem gegenüber Isocyanaten reaktiven Wasserstoffatom, beispielswiese eine SH—, NH— und/oder $NH_2$-Gruppe besitzen. Geeignet sind auch Verbindungen, die neben mindestens einer Hydroxylgruppe eine sekundäre und tertiäre Aminogruppe gebunden haben oder Mischungen aus hydroxylgruppenhaltigen sekundären und tertiären Aminen. Genannt seien beispielsweise sekundäre Amine, z.B. N-Alkylalkanolamine mit 1 bis 4 Kohlenstoffatomen im Alkylrest, wie N-Methyl-äthanolamin, N-Butyl-äthanolamin, N-Äthyl-propanolamin und N-Methyl-propanolamin, Dialkanolamine, wie Diäthanolamin und Diisopropanolamin, tertiäre Amine, z.B. N-Alkyl-dialkanolamine mit 1 bis 4 Kohlenstoffatomen im Alkylrest, wie N-Methyl-diäthanolamin, N-Methyl-diisopropanolamin, N-Äthyl-diäthanolamin, N-Äthyldiisopropanolamin und N-Butyl-diäthanolamin; Trialkanolamine, wie Triäthanolamin, Triisopropanolamin; N,N,N′,N′-tetrakis-($\beta$-hydroxyäthyl)-äthylen-diamin, N,N,N′,N′-tetrakis-($\beta$-hydroxypropyl)-äthylendiamin, N,N,N′,N″,N″-pentakis-($\beta$-hydroxyäthyl)-diäthylen-triamin sowie sekundäre und/oder tertiäre Aminogruppen enthaltende Kondensationsprodukte aus aliphatischen Diaminen mit 2 bis 12, vorzugsweise 2 bis 6 Kohlenstoffatomen im Alkylenrest, wie Äthylendiamin, 1,4-Butylendiamin und 1,6-Hexamethylendiamin, und Alkylenoxiden, beispielsweise Äthylenoxid und Propylenoxid und deren Gemische, mit Molekulargewichten von 75 bis 800, vorzugsweise von 80 bis 600 und sekundäre und/oder tertiäre Aminogruppen enthaltende Polyesterole, wie sie im weiteren Verlauf beschrieben werden. Die hydroxylgruppenhaltigen sekundären und/oder tertiären Amine können als solche oder in Form von Mischungen zur Anwendung gelangen. Vorzugsweise verwendet werden Dialkanolamine, insbesonders Diäthanolamin, Trialkanolamine, insbesonders Triäthanolamin, N,N,N′,N′-tetrakis-($\beta$-hydroxypropyl)-äthylendiamin, N,N,N′,N″,N″-pentakis-($\beta$-hydroxyäthyl)-diäthylen-triamin, sekundäre und/oder tertiäre Aminogruppen enthaltende Kondensationsprodukte aus aliphatischen Diaminen und Äthylenoxid und/oder Propylenoxid und sekundäre und/oder tertiäre Aminogruppen enthaltende Polyesterole, insbesonders aus aliphatischen Dicarbonsäuren und Isopropanolamingemischen.

Naphthensäuren im Sinne der Erfindung sind Säuren und Säuregemische mit den allgemeinen Formeln $C_nH_{2n-1}COOH$ und $C_nH_{2n-3}COOH$, die im Erdöl vorkommen. Sie werden üblicherweise durch Extraktion mit Alkali und Ansäuern der alkalischen Lösung in Form eines braunen bis schwarzen, viskosen Produkts gewonnen und enthalten gewöhnlich noch gewisse Anteile an Neutralölen. Naphthensäuren sind gesättigte cyclische Carbonsäuren, die je nach Herkunft des Erdöls mehr oder weniger große Anteile an linearen aliphatischen Carbonsäuren der Formel $C_nH_{2n+1}COOH$ enthalten. Man unterscheidet bei Naphthensäuren monocyclische Carbonsäuren der Formel $C_nH_{2n-1}COOH$ von bicyclischen Carbonsäuren der Formel $C_nH_{2n-3}COOH$. Die monocyclischen Carbonsäuren beginnen mit der einfachsten Naphthensäure, der Cyclopentancarbonsäure und steigen an bis zu Verbindungen mit 20 Kohlenstoffatomen. Sie sind fast immer vermischt mit Carbonsäuren der bicyclischen Reihe $C_nH_{2n-3}COOH$ ($n \geqslant 12$). Die Naphthensäuren können mit Hilfe bekannter Verfahren gereinigt werden. Entsprechende Verfahren werden beispielsweise beschrieben in der Monographie "Naphthensäuren und Naphthenate" von W. F. Maass, E. Buchspiess-Paulentz und F. Stinsky, Verlag für chemische Industrie H. Ziolkowsky KG. Augsburg, 1961. Geeignet sind sowohl destillierte Naphthensäuren als auch die preiswerten technischen Qualitäten. Vorzugsweise verarbeitet werden handesübliche technische Naphthensäuren.

Der erfindungsgemäß verwendbaren Naphthensäuren besitzen Säurezahlen von 60 bis 350, vorzugsweise von 90 bis 280, und Dichten bei 15°C von 0,92 bis 1,00, vorzugsweise von 0,96 bis 0,995 $g/cm^3$.

Zur Herselung der neutralen, sauren oder basischen Salze werden die hydroxylgruppenhaltigen sekundären und tertiären Amine und Naphthensäuren bei Temperaturen von 0°C bis 150°C, vorzugsweise von 10°C bis 100°C, in solchen Mengen zur Reaktion gebracht, daß pro Carboxyläquivalent 0,3 bis 50, vorzugsweise 0,5 bis 30, insbesondere 0,8 bis 10 äquivalente sekundäre und/oder tertiäre Aminogruppen vorliegen. Unter den genannten Reaktionsbedingungen entstehen vorzugsweise die Salze der genannten Ausgangskomponenten. Es hat sich jedoch gezeigt, daß auch durch die Bildung von Naphthensäreamiden oder Naphthensäureestern in untergeordneten Mengen das erfindungsgemäße Verfahren nicht negativ beeinflußt wird.

Zur Herselung der halbharten und harten Polyurethaneschaumstoffe können als Polyhydroxyverbindungen ausschließlich die beschriebenen neutralen, sauren und vorzugsweise basischen Naphthensäuresalze verwendet werden. Zur Herselung von Schaumstoffen mit je nach Anwendungsgebieten speziellen mechanischen Eigenschaften hat es sich jedoch als zweckmäßig erwiesen, die neutralen, sauren und insbesondere basischen Naphthensäuresalze mit üblichen Polyolen zu mischen. Besonders bewährt und daher vorzugsweise verwendet werden Mischungen aus

3

a) 1 bis 80 Gew.%, vorzugsweise 5 bis 60 Gew.% eines neutralen, sauren oder basischen Salzes aus hydroxylgruppenhaltigen sekundären und/oder tertiären Aminen und Naphthensäuren und

b) 99 bis 20 Gew.%, vorzugsweise 95 bis 40 Gew.%, eines üblichen Polyols oder Polyolgemisches aus Polyätherolen und/oder Polyesterolen, wobei die Gew.% bezogen sind auf das Gesamtgewicht der Mischung.

Als übliche Polyole im Sinne der Erfindung kommen beispielsweise Polyesterole und insbesonders Polyätherole in Betracht. Verwendet werden können jedoch auch andere Hydroxylgruppen haltige Polymere mit Molekulargewichten von 200 bis 6000, beispielsweise Polyacetale, wie Polyoxymethylene, Polyesteramide und Polycarbonate, insbesonders solche hergestellt durch Umesterung von Diphenylcarbonat mit Hexandiol-1,6.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen und mehrwertigen Alkoholen, hergestellt werden. Genannt seien beispielhaft aliphatische Dicarbonsäuren, wie Glutarsäure, Pimelinsäure, Korksäure, Acelainsäure, Sebacinsäure, Undecandisäure und vorzugsweise Bernstein- und Adipinsäure und aromatische Dicarbonsäuren, wie Phthalsäure und Terephthalsäure. Beispiele für zwei- und mehrwertige Alkohole sind: Äthylenglykol, Diäthylenglykol, 1,2- bzw. 1,3-Propylenglykol, Dipropylenglykol, Butandiol-1,4, Hexandiol-1,6, Decandiol-1,10, Trimethylolpropan, Glycerin, Pentaerythrit und Saccharose. Vorzugsweise verwendet werden Äthylenglykol, Propylenglykol und Glycerin.

Bewährt haben sich besonders Polyesterole, die durch Polykondensation eines Dicarbonsäuregemisches, das bezogen auf das Gesamtgewicht der genannten Dicarbonsäuren enthält, 20 bis 35 Gew.%, vorzugsweise 28 bis 33 Gew.%, Bernsteinsäure, 35 bis 50 Gew.%, vorzugsweise 40 bis 45 Gew.%, Glutarsäure und 20 bis 32 Gew.%, vorzugsweise 24 bis 28 Gew.% Adipinsäure und mehrwertigen Alkoholen, wie Äthylenglykol, Diäthylenglykol, Propylenglykol, Glycerin und Trimethylolpropane erhalten werden.

Anstelle der mehrwertigen Alkohole können auch Mischungen aus aliphatischen Diolen und Diaminen und Alkanolamingemische, vorzugsweise Isopropanolamingemische, verwendet werden. Als Isopropanolamingemische kommen beispielsweise solche in Betracht, die 5 bis 40 Gew.%, vorzugsweise 15 bis 25 Gew.% Diisopropanalamin und 95 bis 60 Gew.%, vorzugsweise 85 bis 75 Gew.%. Triisopropanolamin, bezogen auf das Gesamtgewicht von Di- und Triisopropanolamin enthalten, wobei das Isopropanolamingemisch noch bis maximal 8 Gew.%, vorzugsweise bis zu 3 Gew.%, bezogen auf das Gesamtgewicht, Nebenprodukte enthalten kann. Die Isopropanolamingemische besitzen mit Phthalsäureanhydrid reagierende Wasserstoffatome entsprechend einer OH-Zahl von 830 bis 950, vorzugsweise von 860 bis 920 (mg KOH/g).

Entsprechende Isopropanolamingemische können beispielsweise bei der Herstellung von Diisopropanolamin aus Ammoniak bzw. Isopropanolamin und Propylenoxid als Nebenprodukte gewonnen werden. Das Dicarbonsäuregemisch kann neben den genannten Dicarbonsäuren noch bis zu 5 Gew.%, vorzugsweise 2 bis 3 Gew.%, bezogen auf das Gesamtgewicht, Verunreinigungen enthalten, welche im wesentlichen aus Imiden der Bernstein- und Glutarsäure bestehen. Dicarbonsäuregemische der genannten Art können beispielsweise als Nebenprodukte bei der Herstellung von Adipinsäure durch Oxidation von Cyclohexanol oder Cyclohexanon mit Salpetersäure gewonnen werden. Die Polyesterole, die Molekulargewichte von 200 bis 4000, vorzugsweise von 300 bis 1500 und OH-Zahlen von 40 bis 800, vorzugsweise von 150 bis 600, besitzen, können einzeln oder als Gemische mit den neutralen, sauren oder basischen Naphthensäuresalze zur Anwendung kommen.

Als Polyole für Hartschaumstoffe sind Polyätherole mit Molekulargewichten von 200 bis 2000, vorzugsweise von 300 bis 1500 und OH-Zahlen von 150 bis 700, vorzugsweise von 300 bis 600, geeignet, für halbharte Schaumstoffe werden Polyätherole mit Molekulargewichten von 1000 bis 6000, vorzugsweise 2000 bis 5000 und OH-Zahlen von 25 bis 600, vorzugsweise von 25 bis 80 verwendet. Die Polyätherole werden nach bekannten Verfahren aus einem oder mehreren Alkylenoxiden mit 2 bis 4 Kohlenstoffatomen im Alkylenrest und einem Startermolekül, das 2 bis 8 aktive Wasserstoffatome gebunden enthält, heregestellt. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Also Startermoleküle kommen beispielsweise in Betracht: Wasser, Dicarbonsärein, wie Bernstein-, Adipin-, Phthal- und Terephthalsäure, gegebenenfalls mono- und dialkylsubstituiert Diamine mit 1 bis 4 Kohlenstoffatomen im Alkylrest, wie Äthylendiamin, 1,2- bzw. 1,3-Propylendiamin, 1,4-Butylendiamin, 1,6-Hexamethylendiamin, 4,4'-, 2,4'- und 2,2'-Diaminodiphenylmethan, gegebenenfalls alkylsubstituierte Dialkanolamine mit 1 bis 4 Kohlenstoffatomen im Alkylrest, wie Diäthanolamin, Diisopropanolamin, N-Methyl- und N-Äthyl-diäthanolamin; Trialkanolamine, wie Triäthanolamin und Triisopropanolamin und vorzugsweise mehrwertige Alkohole, wie Äthylenglykol, 1,2- bzw. 1,3-Propylenglykol, Diäthylenglykol, Dipropylenglykol, Butylenglykol-1,4, Hexamethylenglykol-1,6, Glycerin, Trimethylolpropan, Trimethyloläthan, Pentaerythrit, Sorbit und Saccharose. Vorzugsweise verwendet werden Äthylenglykol, Propylenglykole, Glycerin, Trimethylolpropan, Sorbit und Saccharose. Die Polyätherole können einzeln oder als Mischungen untereinander und mit den oben

**0017948**

beschriebenen Polyesterolen gemeinsam mit den Naphthensäuresalzen eingesetzt werden. Zur Herstellung von halbharten Schaumstoffen werden vorzugsweise di- bis trifunktionelle, für harte Schaumstoffe tetra- bis octafunktionelle Polyätherole verwendet.

Gegebenenfalls kann es zweckmäßig sein, neben den neutralen, sauren oder basischen Salzen der Naphthensäuren oder Mischungen der Naphthensäure-Salze mit üblichen Polyolen zusätzlich Vernetzungsmittel zur Herstellung der Polyurethan-Schaumstoffe mitzuverwenden. Als Vernetzungsmittel kommen polyfunktionelle, insbesonders di- bis tetrafunktionelle Verbindungen mit Molekulargewichten von 18 bis kleiner 600, vorzugsweise von 60 bis 300, in Betracht. Geeignet sind beispielsweise zwei- und/oder dreiwertige Alkohole, wie Äthylenglykol, Propylenglykol, Butylenglykol-1,4, Hexamethylenglykol-1,6, Glycerin, Di-($\beta$-hydroxyäthyl)-hydrochinon, Diamine, wie Athylendiamin, 3,3'-di-bzw. 3,3',5,5'-tetraalkylsubstituierte 4,4'-Diamino-diphenylmethane mit 1 bis 4 Kohlenstoffatomen im Alkylrest, 3,3'-Dchlor-4,4'-diaminodiphenylmethan und Alkanolamine, wie Diäthanolamin und Triäthanolamin.

Zur Herstellung der Polyurethan-Schaumstoffe sind organische Polyisocyanate der Formel R(NCO)$_n$ geeignet, worin R mehrwertige aliphatische, alkylaromatische oder aromatische organische Reste oder gemischte Reste dieser Art und n eine ganze Zahl bedeuten, deren Wert der Valenzzahl von R entspricht und wenigstens zwei beträgt. Zu typischen organischen Polyisocyanaten für die erfindungsgemäßen Zwecke gehören beispielsweise aromatische Polyisocyanate, wie 2,4- und 2,6--Toluylendiisocyanat, 2,2'-, 2,4'-, 4,4'-Diphenylmethan-diisocyanat, Triphenylmethan-triisocyanate, Biphenyl-diisocyanate, m- oder p-Phenylendiisocyanat und 1,5-Naphthylendiisocyanat und aliphatische Polyisocyanate, wie Isophorondiisocyanat und Hexamethylendiisocyanat. Vorzugsweise verwendet werden die rohen und reinen Toluylendiisocyanate und Mischungen aus 2,2'-, 2,4'- und 4,4'-Diphenylmethan-diisocyanat und Polyphenyl-polymethylen-polyisocyanaten. Die Polyisocyanate können einzeln oder als Gemische zur Anwendung kommen.

Zu Triebmitteln, welche beim erfindungsgemäßen Verfahren verwendet werden könne, gehört Wasser, das mit Isocyanatgruppen unter Bildung von Kohlendioxid reagiert. Die Wassermengen, die zweckmäßigerweise verwendet werden könne, betragen 0,1 bis 3 Gew.%, vorzugsweise 0,5 bis 2,5 Gew.% bezogen auf das Gewicht an Polyhydroxyverbindung. Gegebenenfalls können auch größere Wassermengen verwendet werden, jedoch vorzugsweise dann nicht, wenn Wärmeisolationseigenschaften von besonderer Bedeutung sind.

Andere verwendbare Triebmittel, die vorzugsweise verwendet werden, sind niedrigsiedende Flüssigkeiten, die unter dem Einfluß der exothermen Polyadditionsreaktion verdampfen.

Geeignet sind Flüssigkeiten, welche gegenüber dem organischen Polyisocyanat inert sind und Siedepunkte von nicht über 100°C bei Atmosphärendruck, vorzugsweise zwischen −40 und +50°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigseidenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von Schaumstoffen hängt von der Schaumdichte, die man erreichen will, sowie gegebenenfalls von der Mitverwendung von Wasser ab. Im allgemeinen liefern Mengen von 5 bis 40 Gewichtsprozent, bezogen auf 100 Gewichtsteile organisches Polyisocyanat, zufriedenstellende Ergebnisse.

Wie bereits ausgeführt wurde, besitzen die erfindungsgemäß verwendbaren neutralen, sauren oder basischen Naphthensäuresalze eine gewisse schaumstabilisierende und die Porenstruktur beeinflussende Wirkung, so daß bei der Herstellung der Polyurethan-Schaumstoffe gegebenenfalls ganz oder teilweise auf derartige Hilfsstoffe verzichnet werden kann. Üblicherweise werden aber auch bei dem erfindungsgemäßen Verfahren oberflächenaktive Substanzen mitverwerndet. Auch andere Hilfs- und Zusatzsstoffe können Anwendung finden. Genannte seien beispielsweise Katalysatoren, Weichmacher, Flammschutzmittel, Hydrolysenschutzmittel, fungistatisch und bakteriostatisch wirkende Substanzen, Farbstoffe, Pigmente und Füllstoffe.

Zur Beschleunigung der Umsetzung zwischen den Polyhydroxyverbindungen, gegebenenfalls Kettenverlängerungsmittel und Wasser und den organischen Polyisocyanaten können der Reaktionsmischung übliche Katalysatoren, beispielsweise tertiäre Amine, wie Dimethylbenzylamin, Dicyclohexylmethylamin, Dimethylcyclohexylamin, N-Methyl- bzw. N-Äthylmorpholin, Dimethylpiperazin, Pyridin, 1-Aza-bicyclo-(3,3,0)-octan, Dimethylaminoäthanol, 1,2-Dimethylimidazol und vorzugsweise Triäthylendiamin, und Metallsalze, wie Eisen-II-chlorid, Zinkchlorid und vorzugsweise Zinn-II-salze und Dibutylzinndilaurat hinzugefügt werden. Zur Erzielung von verschäumungstechnisch günstigen Reaktionszeiten wird in Abhängigkeit von der durch Konstitution bestimmten Aktivität des gewählten Katalysators bzw. des Katalysatorgemischs die einzusetzende Menge empirisch ermittelt.

Zusätzlich verwendet werden können beispielsweise auch oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthyliert Fettalkohole,

5

Paraffinöle, Rizinusöl- bzw. Rizonolsäureester und Türkischrotöl, die in Mengen von 0,2 bis 6 Gewichtsteilen pro 100 Gewichtsteil Polyhydroxyverbindungen angewandt werden.

Es kann auch vorteilhaft sein, einen Weichmacher in das Reaktionsgemisch einzubeziehen, so daß die Neigung zur Sprödigkeit in den Produkten verringert wird. Es können übliche Weichmachungsmittel verwendet werden, doch ist es besonders zweckmäßig, solche Mittel zur verwenden, die Phosphor und/oder Halogenatome enthalten und dadurch die Flammfestigkeit der Polyurethankunststoffe vergrößern. Zu solchen Mitteln gehören Trikresylphosphat, Tris-2-chloräthylphosphat, Trischlorpropylphosphat, und Tris-2,3-dibrompropylphosphat.

Außer de bereits genannten halogensubstituierten Phosphaten, die aufgrund ihrer Weichermacherwirkung die Verarbeitungseigenschaften beeinträchtigen können, können auch andere Flammschutzmittel eingesetzt werden. So hat es sich als zweckmäßig erwiesen, zur Verbesserung des Brandverhaltens von Polyurethan-Schaumstoffen gemäß DIN 4102, d.h. um von der Baustoff-Klasse B3 nach Baustoffklasse B2 zu gelangen, einbaubare Flammschutzmittel, beispielsweise Diäthanolaminomethylphosphorsäure-diäthylester, 2,3-Dibrompropanol oder ein halogenhaltiges Polyol (Handelsprodukt® Ixol BP 401 der Firma Solvay) zu verwenden. Auch anorganische Flammschutzmittel, wie Antimontrioxid, Arsenoxid, Ammoniumphosphat und Calciumsulfat eignen sich zum Flammfestmachen der Polyurethanschaumstoffe. Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile Polyhydroxyverbindungen zur verwenden.

Nähere Angaben über die obengenannten anderen üblichen Hilfs- und Zusatzstoffe sind der Fachliteratur, beispielsweise der Monographie von J. H. Saunders und K. C. Frisch "High Polymers", Band XVI, Polyurethanes, Teil 1 und 2, Verlag Interscience Publishers, 1962 bzw. 1964 zu entnehmen.

Die erfindungsgemäßen Polyurethan-Schaumstoffe werden nach dem Präpolymer- und vorzugsweise dem one shot-Verfahren hergestellt.

Erfolgt die Schaumstoffherstellung nach dem one shot-Verfahren, so wird üblicherweise eine Mischung aus Polyhydroxyverbindung, Treibmittel, gegebenenfalls Hilfs- und Zusatzstoffen mit den organischen Polyisocyanaten bei Temperaturen von 10 bis 40°C, vorzugsweise 15 bis 33°C, in solchen Mengen zur Umsetzung gebracht, daß das Verhältnis von Hydroxylverbindungen der Polyhydroxyverbindungen und gegebenenfalls Vernetzer zu NCO-Gruppen der organischen Polyisocyanate 0,8:1 bis 1,2:1, vorzugsweise 1:1,1 bis 1 beträgt. Bei Verwendung einer Mischkammer mit mehreren Zulaufdüsen können die flüssigen Ausgangsstoffe einzeln oder, sofern die Komponenten fest sind, in Form von Lösungen oder Suspensionen zugeführt und in der Mischkammer intensiv vermischt werden. Üblicherweise wird man nach dem Zweikomponenten-Verfahren arbeiten und die Mischung aus Polyhydroxyverbindung, Triebmittel, gegebenenfalls Hilfs- und Zusatzstoffen zu der Komponente A vereinigen und als Komponente B die organischen Polyisocyanate verwenden.

Die erfindungsgemäß hergestellten, halbharten und harten Polyurethan-Schaumstoffe besitzen Raumgewichte von 15 bis 150 g/l. Die halbharten Schaumstoffe zeichnen sich besonders durch ihre hohe Zähigkeit, geringe Sprödigkeit und guten Fließeigenschaften aus. Die harten Schaumstoffe besitzen ausgezeichnete Druckfestigkeiten und können in Formulierungen für Doppelbandanlagen mit hohen Produktionsgeschwindigkeiten zu Sandwichplatten verarbeitet werden.

Die in den Beispielen genannten Teile beziehen sich auf das Gewicht.

Beispiel 1 bis 16
Herstellung der erfindungsgemäß verwendbaren Naphthensäure-Salze

In einem Reaktionsgefäß werden bei 25°C 100 Teile Naphthensäure unter Rühren mit Alkanolaminen umgesetzt. Nach Abklingen der exothermen Reaktion läßt man das Rekationsgemisch 15 Stunden stehen. Die erhaltenen Salze werden ohne weitere Behandlung für Polyurethan-Systeme verwendet.

Naphthensäure A, Säurezahl: 217

| Beispiele | Alkanolamin | Teile | Neutralisationsgrad [%] | Viskosität [Pa · s] |
|---|---|---|---|---|
| 1 | Triäthanolamin | 57,75 | 100 | 7,2 |
| 2 | Triäthanolamin | 17,32 | 30 | 2,2 |
| 3 | Diäthanolamin | 40,75 | 100 | 9,5 |
| 4 | Diäthanolamin | 12,22 | 30 | 1,0 |
| 5 | Triisopropanolamin | 74,03 | 100 | 14 |
| 6 | Triisopropanolamin | 22,2 | 30 | 4,3 |
| 7 | ®Lupranol 3400[1] | 56,59 | 100 | 120 |
| 8 | ®Lupranol 3400 | 16,98 | 30 | 2,1 |

[1] Handelsprodukt der BASF Aktiengesellschaft auf Basis Äthylendiamin-Propylenoxid OH-Zahl 768

**0 017 948**

Naphthensäure B, Säurezahl: 96

| Beispiele | Alkanolamin | Teile | Neutrali- sationsgrad [%] | Viskosität [Pa · s] |
|---|---|---|---|---|
| 9 | Triäthanolamin | 25,54 | 100 | 185 |
| 10 | Triäthanolamin | 7,66 | 30 | >400 |
| 11 | Diäthanolamin | 18,02 | 100 | 320 |
| 12 | Diäthanolamin | 5,4 | 30 | 300 |
| 13 | Triisopropanolamin | 32,74 | 100 | >400 |
| 14 | Triisopropanolamin | 9,82 | 30 | >400 |
| 15 | Lupranol 3400 | 25,13 | 100 | >400 |
| 16 | Lupranol 3400 | 7,5 | 30 | >400 |

Beispiele 17 bis 32

Zur Herstellung von Polyurethan-Hartschaumstoffen wird die Komponente A, bestehend aus

150 Teilen eines trifunktionellen Polyätherols mit einer OH-Zahl von 400
150 Teilen eines Naphthensäure-Salzes
  3 Teilen eines Schaumstabilisators (DC 190 der Dow Corning)
  6 Teilen einer Katalysatormischung aus Dimethyläthanolamin und Triäthylendiamin im Gewichtsverhältnis 4:1
3,6 Teilen Wasser und
 60 Teilen Monofluortrichlormethan

mit der Komponente B, bestehend aus einer Mischung aus Diphenylmethan-diisocyanaten und Polyphenyl-polymethylen-polyisocyanaten (roh-MDI) mit einem NCO-Gehalt von 30%, in einer solchen Menge innig gemischt und umgesetzt, daß das Verhältnis von Zerewitinoff-aktiven Wasserstoffatomen der Verbindungen der Komponente A zu NCO-Gruppen der Komponente B 1,0:1,05 beträgt.

Die verwendeten Naphthensäure-Salze, die erhaltenen Reaktionsparameter und die ermittelten mechanischen Eigenschaften sind in Tabelle 1 zusammengefaßt.

TABELLE 1

| Bsp. | Naphthen- säuresalz gem. Bsp. | Startzeit [sec] | Abbindezeit [sec] | Steigzeit [sec] | Raumgewicht [g/l] | Druckfestig- keit bei 10% Stauchung [k · Pa] |
|---|---|---|---|---|---|---|
| 17 | 1 | 10 | 25 | 58 | 34,6 | 200 |
| 18 | 2 | 15 | 75 | 150 | 26,8 | 100 |
| 19 | 3 | 4 | 10 | 25 | 33,3 | 120 |
| 20 | 4 | 10 | 70 | 150 | 28,3 | 100 |
| 21 | 5 | 10 | 24 | 54 | 35,2 | 220 |
| 22 | 6 | 10 | 145 | 200 | 30,3 | 150 |
| 23 | 7 | 8 | 22 | 53 | 31,5 | 240 |
| 24 | 8 | 10 | 60 | 115 | 32,5 | 220 |
| 25 | 9 | 13 | 45 | 90 | 28,8 | 80 |
| 26 | 10 | 15 | 80 | 165 | 28,7 | 80 |
| 27 | 11 | 6 | 20 | 55 | 28,8 | 85 |
| 28 | 12 | 15 | 55 | 110 | 30,3 | 100 |
| 29 | 13 | 12 | 40 | 105 | 30,9 | 95 |
| 30 | 14 | 20 | 105 | 190 | 30,3 | 100 |
| 31 | 15 | 13 | 55 | 80 | 28,9 | 95 |
| 32 | 16 | 12 | 45 | 105 | 29,4 | 90 |

Beispiele 33 bis 38 und Vergleichsbeispiel AC

Zur Herstellung von halbharten Polyurethaneschaumstoffen werden die in Tabelle 2 genannten Ausgangsstoffe bei 25°C intensiv gemischt und anschließend aufschäumen gelassen. Das Verhältnis der Zerewitinoff-aktiven Wasserstoffatomen zu NCO-Gruppen betrug stets 1:1.

TABELLE 2

Halbharte Polyurethaneschaumstoffe

| Beispiele | A | 33 | 34 | B | 35 | 36 | C | 37 | 38 |
|---|---|---|---|---|---|---|---|---|---|
| Vergleichsbeispiele | | | | | | | | | |
| Trifunktionelles Polyätherol auf Basis Propylenoxid-Äthylenoxid mit primären Hydroxylgruppen (OH-Zahl: 34) [Teile] | 92,50 | 88,17 | 83,84 | 91,05 | 86,69 | 82,34 | 90,11 | 83,56 | 77,03 |
| Triäthanolamin, techn. [Teile] | 5,0 | 2,50 | — | — | — | — | — | — | — |
| Triisopropanolamin [Teile] | — | — | — | 6,45 | 3,23 | — | — | — | — |
| ®Lupranol 3400 [Teile] | — | — | — | — | — | — | 7,39 | 3,70 | — |
| Naphthensäuresalze gemäß | | | | | | | | | |
| Beispiel 1 [Teile] | — | 6,83 | 13,66 | — | — | — | — | — | — |
| Beispiel 5 [Teile] | — | — | — | — | 7,58 | 15,16 | — | — | — |
| Beispiel 7 [Teile] | — | — | — | — | — | — | — | 10,24 | 20,47 |
| Dimethylcyclohexylamin [Teile] | 0,50 | 0,50 | 0,50 | 0,50 | 0,50 | 0,50 | 0,50 | 0,50 | 0,50 |
| Wasser [Teile] | 2,00 | 2,00 | 2,00 | 2,00 | 2,00 | 2,00 | 2,00 | 2,00 | 2,00 |
| roh-MDI (Visk$_{25°C}$ 200 mPa.s) [Teile] | 51,5 | 51,5 | 51,5 | 51,5 | 51,5 | 51,5 | 51,5 | 51,5 | 51,5 |
| Startzeit [sec] | 24 | 33 | 26 | 31 | 40 | 40 | 26 | 27 | 25 |
| Steigzeit [sec] | 90 | 205 | 140 | 180 | 250 | 245 | 125 | 145 | 140 |
| Raumgewicht [g/l] | 78 | 83 | 82 | 62 | 68 | 69 | 82 | 81 | 76 |

Beispiele 39 bis 52

Die folgenden Beispiele beschreiben die Herstellung von Polyurethanschaumstoffen unter Mitverwendung von Naphthensäure-Triäthanolamin bzw. Triisopropanolamin-Salzen für Sandwichplatten.

Zur Herstellung der Polyurethanschaumstoffe werden die Polyole, Naphthensäuren, Trialkanolamine, Katalysatoren, Schaumstabilisatoren, Treibmittel und gegebenenfalls andere Zusatzstoffe zu einer Komponente A vereinigt und diese danach intensiv bei Raumtemperatur mit der Komponente B, die aus einem Gemisch aus Diphenylmethan-diisocyanaten und Polyphenyl-polymethylen-polyisocyanaten (roh-MDI) mit einem NCO-Gehalt von 30 Gew.% besteht, gemischt.

Die verwendeten Ausgangsstoffe und Mengenverhältnisse sind in Tabelle 3, Kenndaten und die mechanischen Eigenschaften in Tabelle 4 zusammengefaßt.

In Tabelle 3 bedeuten:

I: handelsübliches Polyätherol auf Basis Sorbit-Propylenoxid mit einer OH-Zahl von 490

II: handelsübliches Polyätherol auf Basis Äthylendiamin-Propylenoxid mit einer OH-Zahl von 768

III: handelsübliches Polyätherol auf Basis Äthylendiamin-Propylenoxid mit einer OH-Zahl von 480

IV: Polyesterol auf Basis eines Bernstein-, Glutar-, Adipinsäuregemisches und Triäthanolamin/Triisopropanolamin mit einer OH-Zahl von 483

V: Polyesterol auf Basis eines Bernstein-, Glutar-, Adipinsäuregemisches und Triäthanolamin/Triisopropanolamin mit einer OH-Zahl von 483

VI: Triäthanolamin

VII: Triisopropanolamin

VIII: Naphthensäure C (Säurezahl 93)

IX: Naphthensäure D (Säurezahl 128)

X: Naphthensäure E (Säurezahl 180)

XI: Naphthensäure F (Säurezahl 230)

XII: Glycerin

XIII: Wasser

XIV: Trichloräthylphosphat

XV: Dimethylcyclohexylamin

XVI: Triäthylendiamin

XVII: Dibutylzinndilaurat

XVIII: Natriumhydroxid

XIX: Schaumstabilisator ®Tegostab B 1903 (Firma Th. Goldschmidt, Essen)

XX: Schaumstabilisator DC 192 (Hersteller Dow Corning)

XXI: Fluortrichlormethan

XXII: Gemisch aus Diphenylmethan-diisocyanaten und Polyphenyl-polymethylen-polyisocyanaten.

8

## 0 017 948

### TABELLE 3

Beispiele 39 bis 54
Ausgangskomponenten und eingesetzte Mengen in Gewichtsteilen

| Reaktions-komponente | I | II | III | IV | V | VI | VII | VIII | IX | X | XI |
|---|---|---|---|---|---|---|---|---|---|---|---|
| **Beispiele** | | | | | | | | | | | |
| 39 | — | 59 | — | — | — | — | — | — | — | — | 11 |
| 40 | 28 | — | — | 31 | — | — | — | — | — | — | 30 |
| 41 | 18 | — | — | 23 | — | — | 22 | — | 20 | — | — |
| 42 | 43 | — | — | — | — | 25 | — | — | — | 23 | — |
| 43 | 30 | — | — | — | 30 | — | — | 24 | — | — | — |
| 44 | — | — | — | — | — | — | 33 | — | 44 | — | — |
| 45 | — | — | 35 | — | — | 39 | — | — | — | — | 25 |
| 46 | — | — | 74 | — | — | — | — | — | — | — | 11 |
| 47 | — | 72 | — | — | — | — | — | 32 | — | — | — |
| 48 | 59 | — | — | — | — | 12 | — | — | 18 | — | — |
| 49 | 49 | — | — | — | — | — | 36 | — | — | 33 | — |
| 50 | — | 18 | — | 25 | — | 32 | — | — | — | — | 22 |
| 51 | 25 | — | — | — | — | 24 | — | 34 | — | — | — |
| 52 | — | — | 51 | — | — | — | — | — | 15 | — | — |
| 53[+] | — | — | 28 | — | — | — | — | — | — | 25 | — |
| 54[+] | 23 | — | — | — | — | 25 | — | — | — | 25 | — |

### TABELLE 3 Forts.

| Reaktions komponente | XII | XIII | XIV | XV | XVI | XVII | XVIII | XIX | XX | XXI | XXII |
|---|---|---|---|---|---|---|---|---|---|---|---|
| 39 | — | — | 8 | 1,3 | — | 0,06 | — | 0,8 | — | 30 | 121 |
| 40 | 24 | — | 14 | — | 2 | 0,04 | — | — | 1,0 | 50 | 190 |
| 41 | 11 | — | 10 | 3 | — | 0,12 | — | — | 1,0 | 38 | 155 |
| 42 | 7 | 0,2 | 12 | 4 | — | 0,10 | 0,2 | — | 0,9 | 36 | 172 |
| 43 | 21 | — | 17 | 2 | 0,5 | 0,15 | — | 1 | — | 47 | 184 |
| 44 | 11 | — | 9 | 2,5 | — | 0,08 | — | 0,8 | — | 34 | 140 |
| 45 | — | — | 12 | — | — | — | — | — | 0,9 | 45 | 166 |
| 46 | 22 | — | 15 | — | 1 | 0,07 | — | — | 1,1 | 50 | 194 |
| 47 | — | — | 12 | 2 | — | 0,08 | — | 0,8 | — | 40 | 145 |
| 48 | 12 | — | 10 | 4 | — | 0,1 | — | — | 0,9 | 43 | 175 |
| 49 | 6 | 0,5 | 14 | 1 | — | 0,08 | 0,5 | — | 1 | 38 | 198 |
| 50 | — | — | 11 | — | — | — | — | 1 | — | 44 | 169 |
| 51 | 13 | — | 12 | 4 | — | 0,1 | — | — | 11 | 42 | 174 |
| 52 | 24 | — | — | — | 1,5 | 0,04 | — | 0,9 | — | 39 | 176 |
| 53[+] | 21 | 1,0 | 18 | 4 | — | 0,15 | — | 1 | — | 29 | 185 |
| 54[+] | 6 | 1,4 | 23 | 4 | — | 0,12 | 0,4 | 1 | — | 25 | 191 |

[+] Die Komponenten A der Bsp. Nrn. 53 und 54 enthalten zusätzlich 25 bzw. 20 Gew.-Teile Ixol BP 401, ein Brandschutzpolyol der Firma Solvay.

### TABELLE 4

Beispiele 39 bis 54
Kenndaten und mechanische Eigenschaften

| Beispiele | Startzeit [sec] | Abbindezeit [sec] | Klebfreizeit [sec] | Raumgewicht [kg/m$^3$] | Druckfestigk. [kPa] | Stauch bei Bruch [%] |
|---|---|---|---|---|---|---|
| 39 | 16 | 27 | 35 | 30,6 | 253 | 6,9 |
| 40 | 25 | 62 | 110 | 25,5 | 145 | 5,8 |
| 41 | 12 | 27 | 45 | 23,4 | 165 | 6,2 |
| 42 | 10 | 22 | 35 | 27,3 | 171 | 7,0 |
| 43 | 20 | 55 | 100 | 24,3 | 130 | 6,5 |
| 44 | 7 | 17 | 25 | 27,5 | 184 | 6,5 |
| 45 | 7 | 16 | 25 | 29 | 205 | 5,7 |
| 46 | 17 | 36 | 50 | 27,2 | 210 | 6,1 |
| 47 | 16 | 32 | 40 | 28,1 | 218 | 5,8 |
| 48 | 17 | 39 | 70 | 25,3 | 161 | 7,1 |

**0017948**

TABELLE 4 Fortsa

Beispiele 39 bis 54
Kenndaten und mechanische Eigenschaften

| Beispiele | Startzeit [sec] | Abbindezeit [sec] | Klebfreizeit [sec] | Raumgewicht [kg/m³] | Druckfestigk. [kPa] | Stauch bei Bruch [%] |
|---|---|---|---|---|---|---|
| 49 | 14 | 28 | 45 | 27,4 | 185 | 7,3 |
| 50 | 7 | 18 | 30 | 28,3 | 192 | 6,4 |
| 51 | 11 | 27 | 50 | 24,0 | 154 | 5,8 |
| 52 | 18 | 38 | 55 | 24,9 | 164 | 6,7 |
| 53[+] | 18 | 47 | 75 | 28,0 | 132 | 6,0 |
| 54[+] | 11 | 20 | 35 | 31.7 | 151 | 8,4 |

[+]Die Schäme der Bsp. Nrn. 53 und 54 entsprechen im Brandverhalten der Baustoffklasse B 2 nach DIN 4102

**Patentansprüche**

1. Verfahren zur Herstellung von Polyurethan-Schaumstoffen aus Polyhydroxyverbindungen, organischen Polyisocyanaten, Triebmitteln und gegebenenfalls Katalysatoren, Hilfs- und Zusatzstoffen, dadurch gekennzeichnet, daß man als Polyhydroxyverbindungen neutrale, saure oder basische Solze aus hydroxylgruppenhaltigen sekundären und/oder tertiären Aminen und Naphthensäuren verwendet.

2. Verfahren gemäß Anspruch 1, dadurch gekennzeichnet, daß man als Polyhydroxyverbindungen Mischungen aus den genannten Salzen und üblichen Polyolen verwendet.

3. Verfahren gemäß Anspruch 2, dadurch gekennzeichnet, daß die Mischungen bestehen aus

a) 1 bis 80 Gew.% der genannten Salze und
b) 99 bis 20 Gew.% eines üblichen Polyols, wobei die Gew.% bezogen sind auf das Gesamtgewicht der Mischung.

4. Verfahren gemäß Anspruch 1, dadurch gekennzeichnet, daß die genannten Salze erhalten werden durch Umsetzung von 0,5 bis 30 Äquivalente hydroxylgruppenhaltiger sekundärer und/oder tertiärer Amine pro Carboxyläquivalent der Naphthensäure.

5. Verfahren gemäß Anspruch 1, dadurch gekennzeichnet, daß als sekundäre und/oder tertiäre Amine verwendet werden Dialkanolamine, Trialkanolamine, N,N,N',N'-tetrakis($\beta$-hydroxy-propyl)äthylen-diamin, N,N,N',N'',N''-pentakis-($\beta$-hydroxyäthyl)-diäthylen-triamin und niedermolekulare, sekundäre und/oder tertiäre Aminogruppen enthaltende Kondensationsprodukte aus aliphatischen Diaminen mit 2 bis 12 Kohlenstoffatomen und Äthylenoxid und/oder Propylenoxid.

6. Verfahren gemäß Anspruch 1, dadurch gekennzeichnet, daß als sekundäre und/oder tertiäre Amine verwendet werden sekundäre und/oder tertiäre Aminogruppen enthaltende Polyesterole.

7. Verfahren gemäß Anspruch 6, dadurch gekennzeichnet, daß als sekundäre und/oder tertiäre Aminogruppen enthaltende Polyesterole Kondensationsprodukte aus aliphatischen Dicarbonsäuren und Isopropanolamingemischen verwendet werden.

**Revendications**

1. Procédé de préparation de polyuréthanes alvéolaires, à partir de composés polyhydroxy, polyisocyanates organiques, gonflants et éventuellement catalyseurs, auxiliaires et additifs, caractérisé par le fait qu'on utilise, comme composés polyhydroxy, des sels neutres, acides ou basiques d'amines secondaires et/ou tertiares à groupes hydroxyle et d'acides naphthéniques.

2. Procédé selon la revendication 1, caractérisé par le fait qu'on utilise, comme composés polyhydroxy, des mélanges des sels indiqués et de polyols usuels.

3. Procédé selon la revendication 2, caractérisé par le fait que les mélanges sont constitués de

a) 1 à 80% en poids des sels indiqués et
b) 99 à 20% en poids d'un polyol usuel, les pourcentages se rapportant au poids total du mélange.

4. Procédé selon la revendication 1, caractérisé par le fait que les sels indiqués sont obtenus par réaction de 0,5 à 30 équivalents d'amine secondaire et/ou tertiaire, à groupes hydroxyle, par équivalent carboxy de l'acide naphthénique.

5. Procédé selon la revendication 1, caractérisé par le fait que l'on utilise, comme amine secondaire et/ou tertiaire, une dialcanolamine, trialcanolamine, N,N,N',N'-tétrakis($\beta$-hydroxypropyl)-éthylènediamine, N,N,N',N'',N''-pentakis-($\beta$-hydroxyéthyl)-diéthylènetriamine et un produit de condensation à faible poids moléculaire, contenant des groupes amino secondaires et/ou tertiaires, de diamine aliphatique ayant 2 à 12 atomes de carbone et d'oxyde d'éthylène et/ou oxyde de propylène.

**0 017 948**

6. Procédé selon la revendication 1, caractérisé par le fait que l'on utilise, comme amine secondaire et/ou tertiaire, un polyestérol contenant des groupes amino secondaires et/ou tertiaires.

7. Procédé selon la revendication 6, caractérisé par le fait qu l'on utilise, comme polyestérol contentant des groupes amino secondaires et/ou tertiaires, un produit de condensation d'acide dicarboxylique aliphatique et de mélange d'isopropanolamine.

**Claims**

1. A process for the production of polyurethane foams from polyhydroxy compounds, organic polyisocyanates, blowing agents, with or without catalysts, auxiliaries and additives, wherein neutral, acid or basic salts of hydroxyl-containing secondary and/or tertiary amines and naphthenic acids are used as polyhydroxy compounds.

2. A process as claimed in claim 1, wherein mixtures of the said salts and conventional polyols are used as polyhydroxy compounds.

3. A process as claimed in claim 2, wherein the mixtures consist of

(a)    1 to 80% by weight of the said salts, and
(b)    99 to 20% by weight of a conventional polyol, the percentages by weight being based on the total weight of the mixture.

4. A process as claimed in claim 1, wherein the said salts are obtained by reacting 0,5 to 30 equivalents of hydroxyl-containing secondary and/or tertiary amines per carboxyl equivalent of naphthenic acid.

5. A process as claimed in claim 1, wherein the secondary and/or tertiary amines used are dialkanolamines, trialkanolamines, N,N,N',N'-tetrakis($\beta$-hydroxypropyl)ethylenediamine, N,N,N',N'',N''-pentakis($\beta$-hydroxyethyl)diethylenetriamine and low molecular weight condensates containing secondary and/or tertiary amino groups and obtained from aliphatic diamines of 2 to 12 carbon atoms and ethylene oxide and/or propylene oxide.

6. A process as claimed in claim 1, wherein the secondary and/or tertiary amines used are hydroxyl-containing polyesters containing secondary and/or tertiary amino groups.

7. A process as claimed in claim 6, wherein condensates of aliphatic dicarboxylic acids and isopropanolamine mixtures are used as hydroxyl-containing polyesters containing secondary and/or tertiary amino groups.